(19) Europäisches Patentamt
European Patent Office
Office européen des brevets

(11) **EP 2 906 975 B1**

## (12) FASCICULE DE BREVET EUROPEEN

(45) Date de publication et mention de la délivrance du brevet:
**27.07.2016 Bulletin 2016/30**

(21) Numéro de dépôt: **13745842.8**

(22) Date de dépôt: **06.08.2013**

(51) Int Cl.:
**G02B 6/00** (2006.01)          **F21V 8/00** (2006.01)

(86) Numéro de dépôt international:
**PCT/EP2013/066498**

(87) Numéro de publication internationale:
**WO 2014/056648 (17.04.2014 Gazette 2014/16)**

(54) **ENSEMBLE D'AFFICHAGE D'INFORMATIONS COMPRENANT UN DISPOSITIF D'AFFICHAGE D'INFORMATIONS ECLAIRE AU MOYEN D'UN GUIDE DE LUMIERE**

GESAMTHEIT EINES INFORMATIONSANZEIGESYSTEMS, DAS EINE INFORMATIONSANZEIGEVORRICHTUNG UMFASST, DIE MIT HILFE EINES LICHTWELLENLEITERS BELEUCHTET WIRD

INFORMATION DISPLAY ASSEMBLY INCLUDING AN INFORMATION DISPLAY DEVICE ILLUMINATED BY MEANS OF A LIGHT GUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2012 EP 12188107**

(43) Date de publication de la demande:
**19.08.2015 Bulletin 2015/34**

(73) Titulaire: **The Swatch Group Research and Development Ltd**
**2074 Marin (CH)**

(72) Inventeur: **TORTORA, Pierpasquale**
**CH-2000 Neuchâtel (CH)**

(74) Mandataire: **Supper, Marc**
**ICB**
**Ingénieurs Conseils en Brevets**
**Fbg de l'Hôpital 3**
**2001 Neuchâtel (CH)**

(56) Documents cités:
**WO-A1-2011/100277    WO-A2-2008/045200**

EP 2 906 975 B1

**Description**

La présente invention concerne un guide de lumière optiquement isolé au moyen d'une couche poreuse. Plus précisément, la présente invention concerne l'intégration dans un dispositif de guidage de la lumière d'une couche poreuse permettant le collage de films optiques sans modification des propriétés optiques de propagation de la lumière dans le dispositif de guidage de la lumière.

Depuis quelques décennies déjà, les couches poreuses, aussi bien organiques qu'inorganiques, trouvent des applications dans des domaines aussi variés que les dispositifs biochimiques, électroniques, optiques ou encore photoniques. L'atout majeur des couches poreuses est de présenter un indice de réfraction généralement faible et modulable. Une telle caractéristique est très intéressante en particulier dans le domaine de l'optique. En effet, la majorité des matériaux utilisés dans les dispositifs optiques sont des matériaux de type diélectrique qui présentent des indices de réfraction élevés, typiquement supérieurs à 1,3. Or, la valeur de l'indice de réfraction conditionne tous les phénomènes optiques tels que la réflexion à l'interface entre deux matériaux de natures différentes ou bien encore le transport d'un flux lumineux dans un guide de lumière.

Très succinctement résumé, une couche poreuse est obtenue à partir d'un volume de matériau diélectrique d'indice de réfraction N à l'intérieur duquel sont créées des cavités de dimensions nanométriques de façon à obtenir une structure alvéolaire. Ces cavités sont remplies d'air qui possède un indice de réfraction n=1. Si la dimension des cavités est inférieure à la longueur d'onde de la lumière qui traverse le matériau poreux, alors ce matériau poreux se comportera vis-à-vis de cette lumière comme un milieu d'indice de réfraction moyen N1 compris entre l'indice de réfraction n de l'air et l'indice de réfraction N du matériau diélectrique. Ainsi, dans un volume de matériau poreux d'échelle comparable à la longueur d'onde de la lumière, l'indice de réfraction optique dépendra des taux d'occupation respectifs de l'air et du matériau diélectrique de façon que n<N1<N. On comprend donc qu'en agissant sur le taux d'occupation des cavités nanométriques, autrement dit en agissant sur la densité ou la taille de ces cavités par unité de volume du matériau diélectrique, ou bien en agissant sur l'indice de réfraction du gaz avec lequel sont remplies les cavités nanométriques, on peut obtenir pour le matériau poreux un continuum de valeurs d'indice de réfraction. Par mise en oeuvre de cette technique, il est ainsi possible de créer par structuration de la matière de nouveaux matériaux pour l'optique que l'on ne trouve pas dans la nature. Les méthodes de fabrication actuelles permettent par exemple de déposer des matériaux poreux en couches minces sur un substrat. En ajustant les indices de réfraction de plusieurs couches superposées, on peut entre autres réaliser des couches antireflets très performantes.

La présente invention s'intéresse à l'application des couches poreuses brièvement décrites ci-dessus dans le domaine des guides de lumière utilisés pour l'éclairage d'un dispositif d'affichage tel qu'une cellule d'affichage à cristaux liquides.

Dans sa forme la plus simple, un dispositif de rétroéclairage, encore connu sous sa dénomination anglo-saxonne « backlight », se compose d'une ou de plusieurs sources de lumière qui injectent de la lumière dans un guide transparent sur la surface duquel sont structurés des extracteurs de lumière tels que des prismes ou des lentilles. Un tel dispositif de rétroéclairage a pour but d'éclairer un dispositif d'affichage d'informations par le dessous de manière aussi homogène que possible. Un film réfléchissant disposé sous le dispositif de rétroéclairage et un film diffusant disposé au-dessus du dispositif de rétroéclairage complètent l'ensemble. La lumière à l'intérieur du guide se propage par réflexion totale sur les parois intérieures du guide. L'angle de réflexion totale maximum est l'angle limite, par rapport à la normale aux surfaces du guide, au-delà duquel un rayon lumineux sort du guide. Pour un guide de lumière entouré d'air, l'angle de réflexion totale maximum est donné par la formule ci-dessous :

$$\theta_{\lim} = \arcsin \frac{n}{N} \qquad (1)$$

où n=1 est l'indice de réfraction de l'air et N est l'indice de réfraction du guide de lumière.

Pour pouvoir garantir le mécanisme de guidage de la lumière dans un dispositif de rétroéclairage, il faut toujours laisser une couche d'air entre le film réfléchissant et le guide de lumière d'une part, et entre le guide de lumière et le film diffusant d'autre part. On ne peut donc pas envisager de coller les films sur le guide. En effet, dans le cas où l'on collerait les films réfléchissant et diffusant sur le guide, la lumière serait expulsée du guide et serait, selon la nature du film, diffusée ou absorbée, ce qui induirait des pertes dans le flux lumineux. Contrairement aux pertes induites par les extracteurs de lumière, les pertes induites par les films collés sur le guide de lumière ne sont pas contrôlables quantitativement, et donc l'uniformité de l'éclairage en serait affectée.

Pour les raisons que l'on vient de décrire, la plupart des dispositifs de rétroéclairage ne sont donc pas fixés directement au dispositif d'affichage d'informations, une couche d'air séparant le dispositif de rétroéclairage du dispositif d'affichage d'informations. En outre, différents films peuvent être disposés entre le dispositif d'affichage d'informations et le dispositif de rétroéclairage. A titre d'exemple, dans l'ordre d'empilement du dispositif de rétroéclairage et du dispositif d'affichage d'informations, un film réfléchissant peut être prévu sous le dispositif de rétroéclairage, séparé de ce dernier par une couche d'air. De même, un film diffusant peut être disposé entre le dispositif de rétroéclairage et le dispositif d'affichage d'informations, le film diffusant étant entouré par l'air. On obtient donc un ensemble encombrant formé d'une multiplicité de pièces qu'il est notamment difficile d'intégrer dans une chaîne de fabrication industrielle automatisée. En outre, si l'ensemble d'affichage d'informations formé par le dispositif d'affichage d'informations et le dispositif de rétroéclairage est logé par exemple dans un boîtier, les modifications apportées à ce boîtier peuvent nécessiter de retoucher le moule d'injection du dispositif de rétroéclairage, voire de devoir réaliser un nouveau moule, ce qui est coûteux. Ceci est particulièrement vrai dans le cas où le dispositif d'affichage d'informations suit un profil courbe. Effectivement, si le dispositif d'affichage d'informations est logé dans un boîtier de volume restreint, il peut être difficile, sauf à devoir respecter des tolérances élevées, d'assurer une couche d'air suffisante sur toute la surface du dispositif d'affichage d'informations à illuminer. On peut donc souhaiter, notamment pour des raisons économiques, réduire ces contraintes, mais ceci implique alors une augmentation de l'encombrement du boîtier.

Un système d'affichage de la technique antérieure est par exemple divulgué dans le document WO 2008/045200.

La présente invention a pour but de remédier aux inconvénients mentionnés ci-dessus ainsi qu'à d'autres encore en procurant un dispositif d'affichage d'informations éclairé par un guide de lumière, le dispositif d'affichage d'informations formant avec le guide de lumière un ensemble monobloc moins encombrant et donc plus facile à loger par exemple dans un boîtier.

A cet effet, la présente invention concerne un ensemble d'affichage d'informations comprenant un dispositif d'affichage d'informations de type réflectif et un guide de lumière dans lequel est injectée de la lumière, le guide de lumière, disposé au-dessus du dispositif d'affichage d'informations par rapport à un observateur, présentant une surface inférieure en regard du dispositif d'affichage d'informations et une surface supérieure opposée à la surface inférieure, des extracteurs de lumière, structurés dans la surface supérieure du guide de lumière, permettant d'extraire une partie de la lumière injectée dans le guide de lumière et de la diriger en direction du dispositif d'affichage d'informations pour éclairer ce dernier, le dispositif d'affichage d'informations étant fixé au guide de lumière avec interposition d'une couche poreuse transparente qui recouvre directement la surface inférieure du guide de lumière.

Grâce à ces caractéristiques, la présente invention procure un ensemble d'affichage d'informations monobloc qu'il est plus facile de manipuler et d'insérer dans une chaîne de fabrication industrielle automatisée que des éléments séparés. Ce résultat est atteint grâce au fait que la couche poreuse qui est disposée entre le dispositif d'affichage d'informations et le dispositif d'éclairage par l'avant est transparente. En effet, de par cet agencement, la couche poreuse se trouve disposée entre l'observateur et le dispositif d'affichage d'informations. Comme cette couche poreuse est transparente, elle ne gêne pas la lisibilité des informations affichées par le dispositif d'affichage d'informations. En outre, l'ensemble d'affichage d'informations monobloc est plus facile à loger par exemple dans un boîtier et ne nécessite pas nécessairement d'être repris en cas de modification du boîtier car la couche d'air qui habituellement isole le guide de lumière par rapport au dispositif d'affichage d'informations est remplacée par une mince couche poreuse transparente qui sert d'isolant optique et qui est en contact direct avec le guide de lumière. En effet, l'indice de réfraction de la couche poreuse, bien que supérieur à l'indice de réfraction de l'air, est très sensiblement inférieur aux indices de réfraction des matériaux que l'on trouve dans la nature et qui ne sont jamais inférieurs à 1.3. Par conséquent, le fait d'isoler le guide de lumière au moyen d'une couche poreuse ne modifie que peu les caractéristiques de propagation de la lumière dans le guide de lumière. Tout au plus, l'ouverture numérique du guide de lumière devient plus petite, de sorte que la propagation de la lumière se fait selon des angles plus rasants. Si l'on peut supporter que moins de lumière puisse être injectée dans le guide de lumière, alors on peut utiliser la couche poreuse comme interface permettant de fixer mécaniquement le guide de lumière sur le dispositif d'affichage d'informations au moyen d'une couche adhésive quelconque. On obtient alors un ensemble d'affichage d'informations monobloc que l'on peut aisément manipuler et insérer dans une ligne de fabrication industrielle automatisée. Par ailleurs, une modification du boîtier dans lequel l'ensemble d'affichage d'informations monobloc est par exemple logé ne nécessite pas de devoir retoucher, voire repenser le moule d'injection du guide de lumière.

Une fois isolé optiquement, le guide de lumière peut être fixé mécaniquement au dispositif d'affichage d'informations soit directement, soit avec interposition entre la couche poreuse et le dispositif d'affichage d'informations d'une couche adhésive transparente, sans que cela n'induise de perte de lumière. On peut donc envisager que le guide de lumière, revêtu de sa couche poreuse, soit fixé directement au dispositif d'affichage d'informations par des procédés physiques ou chimiques de fusion, sans utilisation de couche adhésive. Une telle possibilité est uniquement conditionnée par la nature des matériaux qui composent les différentes couches du système d'affichage et leur compatibilité avec les procédés physiques ou chimiques de fusion. De même, on peut s'affranchir de la couche adhésive dans le cas où le guide de lumière et ses différentes couches sont pressés contre le dispositif d'affichage d'informations au moyen d'un système de tenue mécanique, sans laisser subsister de couche d'air entre les différentes couches du système d'affichage. Une autre possibilité encore de s'affranchir de la couche de colle consiste à créer le vide entre les différentes couches du système d'affichage.

Selon une caractéristique complémentaire de l'invention, l'épaisseur de la couche poreuse est inférieure ou égale à six micromètres.

Le dispositif d'affichage d'informations est de type réflectif. Dans ce cas, le guide de lumière revêtu d'une couche poreuse sur sa face inférieure, est disposé au-dessus du dispositif d'affichage d'informations, dans le sens d'empilement du guide de lumière et du dispositif d'affichage d'informations, avec interposition d'une couche adhésive entre la couche poreuse et le dispositif d'affichage d'informations.

D'autres caractéristiques et avantages de la présente invention ressortiront plus clairement de la description détaillée qui suit d'un mode de réalisation de l'ensemble d'affichage selon l'invention, cet exemple étant donné à titre purement illustratif et non limitatif seulement en liaison avec le dessin annexé sur lequel :

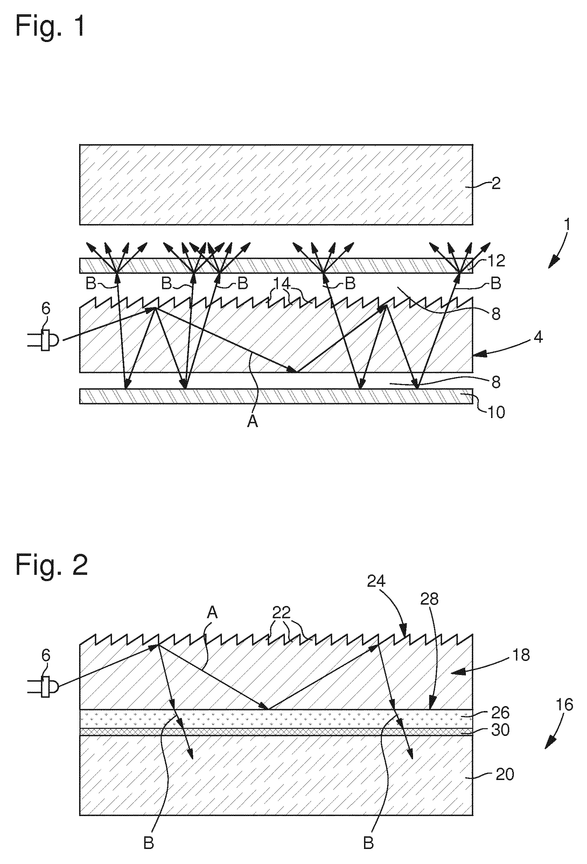

- la figure 1 est une vue schématique d'un ensemble d'affichage d'informations selon l'art antérieur, cet ensemble d'affichage d'informations comprenant un dispositif de rétroéclairage disposé sous un dispositif d'affichage d'informations de type transmissif, le dispositif de rétroéclairage étant placé dans l'air, un film réfléchissant étant disposé sous le dispositif de rétroéclairage et un film diffusant étant disposé entre le dispositif de rétroéclairage et le dispositif d'affichage d'informations, et

- la figure 2 est une vue schématique d'un ensemble d'affichage d'informations selon l'invention, cet ensemble d'affichage comprenant un dispositif d'éclairage isolé optiquement disposé au-dessus d'un dispositif d'affichage d'informations de type réflectif, le dispositif d'éclairage étant fixé au dispositif d'affichage d'informations au moyen d'une couche adhésive qui joue le rôle d'interface mécanique.

La présente invention procède de l'idée générale inventive qui consiste à fixer directement un guide de lumière à un dispositif d'affichage d'informations au moyen d'une couche poreuse transparente. Le guide de lumière, optiquement isolé au moyen de la couche poreuse, est fixé au dispositif d'affichage d'informations par l'intermédiaire d'une couche adhésive. Aujourd'hui, on est en effet en mesure de déposer sur la surface d'un guide de lumière des couches poreuses d'une très grande transparence. Ceci est particulièrement avantageux car une telle couche ne produit pas de variation ni de couleur ni d'esthétique générale du dispositif dans lequel elle est intégrée. De plus, la présence d'une telle couche ne dégrade pas la lisibilité des informations affichées par le dispositif d'affichage d'informations. Grâce à ces caractéristiques, on dispose d'un ensemble d'affichage monobloc moins encombrant et plus facile à intégrer dans une chaîne de fabrication industrielle automatisée. En outre, dans le cas où l'ensemble d'affichage monobloc est par exemple logé dans un boîtier, le plus souvent il ne sera pas nécessaire de retoucher le moule d'injection du guide de lumière dans le cas où le boîtier est modifié.

Dans l'art antérieur, le guide de lumière est séparé du dispositif d'affichage d'informations par une couche d'air. Pour un guide de lumière entouré d'air, l'angle de réflexion totale maximum est donné par la formule ci-dessous :

$$\theta_{\lim} = \arcsin \frac{n}{N} \qquad (1)$$

où n=1 est l'indice de réfraction de l'air et N est l'indice de réfraction du guide de lumière. L'angle de réflexion totale maximum est l'angle limite, par rapport à la normale aux faces du guide de lumière, au-delà duquel un rayon lumineux sort du guide. Dans un guide de lumière entouré d'air, une partie du flux lumineux subit des réflexions totales dans le guide, tandis qu'une autre partie du flux lumineux est extraite du guide par les extracteurs et est dirigée vers le dispositif d'affichage d'informations pour éclairer ce dernier. L'avantage de la couche d'air est qu'elle ne perturbe pas la propagation du flux lumineux dans le guide de lumière. Cependant, la couche d'air ne procure pas d'interface mécanique permettant de fixer le guide de lumière au dispositif d'affichage d'informations. On a donc affaire à un ensemble d'affichage d'informations constitué d'éléments séparés qu'il est difficile d'intégrer dans une chaîne de fabrication industrielle automatisée. En outre, un tel ensemble d'affichage d'informations est volumineux et il peut être nécessaire de retoucher le moule d'injection du guide de lumière, voire de devoir en réaliser un nouveau dans le cas où le boîtier dans lequel le guide de lumière est par exemple logé est modifié. Pour résoudre ce problème, on pourrait envisager de fixer directement le guide de lumière contre le dispositif d'affichage d'informations au moyen d'une couche adhésive. Malheureusement, une telle solution perturbe gravement la propagation du flux lumineux à l'intérieur du guide de lumière. En effet, tandis qu'une partie de la lumière est classiquement extraite du guide de lumière par les extracteurs et vient éclairer le dispositif d'affichage d'informations de manière homogène, une partie importante du flux lumineux sort directement du guide de lumière pour venir éclairer le dispositif d'affichage d'informations, créant des phénomènes de halo lumineux et provoquant une dégradation de l'uniformité de l'éclairage. Il fallait donc trouver un matériau dont l'indice de réfraction, bien que supérieur à l'indice de réfraction de l'air, soit aussi proche que possible de cet indice de réfraction. Or, dans la nature, les matériaux connus possèdent un indice de réfraction au minimum égal à 1.3. Par conséquent, pour un matériau d'indice de réfraction N1 donné supérieur ou égal à 1.3, l'angle de réfraction totale maximum est donné par la relation suivante :

$$\theta_{\lim}^1 = \arcsin \frac{N1}{N} \qquad (2)$$

Comme l'indice de réfraction N1 est supérieur à l'indice de réfraction n=1 de l'air, l'angle de réfraction totale maximum $\theta_{\lim}^1$ augmente et une quantité plus importante de lumière s'échappe directement du guide de lumière. Au contraire, les matériaux poreux qui sont des matériaux que l'on ne trouve pas dans la nature ont des indices de réfraction inférieurs aux indices de réfraction les plus faibles des matériaux naturels. Par conséquent, les couches poreuses offrent un compromis intéressant par rapport à l'air. En effet, comparé au cas où le guide de lumière est entouré d'air, l'utilisation d'une couche de matériau poreux induit une augmentation de l'angle limite, de sorte que la propagation de la lumière à l'intérieur du guide se fait selon des angles plus rasants. Autrement dit, l'ouverture numérique du guide de lumière devient plus petite, de sorte que, pour une source de lumière donnée, il y a moins de lumière qui peut être injectée dans le guide. Toutefois, si l'on est prêt à accepter les légères pertes de flux lumineux qu'induit l'utilisation d'une couche poreuse, on peut alors profiter de l'interface mécanique que procure une telle couche poreuse pour assembler le guide de lumière avec le dispositif d'affichage d'informations. On obtient de la sorte un ensemble d'affichage d'informations monobloc qui est moins volumineux et qu'il est plus aisé à intégrer dans une ligne de production industrielle automatisée. En outre, dans le cas où l'ensemble d'affichage d'informations est logé par exemple dans un boîtier, si ce boîtier subit des modifications, il ne sera le plus souvent pas nécessaire de retoucher le moule d'injection du guide de lumière, voire de devoir en réaliser un nouveau dans le cas le plus défavorable.

La présente invention va être décrite en liaison avec un dispositif d'affichage d'informations de type réflectif. Il peut s'agir de tout type de dispositif d'affichage d'informations à cristal liquide de type réflectif. Il peut également s'agir de dispositifs d'affichage de type purement réflectifs tels que les dispositifs d'affichage à encre électronique ou les dispositifs d'affichage connus sous leur dénomination anglo-saxonne « electro-wetting ». Le dispositif d'affichage d'informations étant de type réflectif, le guide de lumière sera constitué par un dispositif d'éclairage par l'avant encore connu sous sa dénomination anglo-saxonne « front light ».

On notera par ailleurs que la présente invention va être décrite en liaison avec une couche adhésive utilisée pour fixer le guide de lumière contre le dispositif d'affichage d'informations. Il va cependant de soi que cet exemple est donné à titre purement illustratif et non limitatif seulement et que le dispositif d'affichage d'informations et le guide de lumière peuvent être fixés l'un à l'autre par d'autres techniques telles que les procédés physiques ou chimiques de fusion, des moyens de tenue mécaniques ou bien encore par création d'un vide comme déjà mentionné ci-dessus.

La figure 1 est une représentation schématique d'un ensemble d'affichage d'informations selon l'art antérieur. Désigné dans son ensemble par la référence numérique générale 1, cet ensemble d'affichage d'informations se compose pour l'essentiel d'un dispositif d'affichage d'informations 2 de type transmissif et d'un dispositif de rétroéclairage 4 à l'intérieur duquel est injectée la lumière produite par une ou plusieurs sources lumineuses 6. Le dispositif de rétroéclairage 4, entouré de couches d'air 8, est disposé à distance sous le dispositif d'affichage d'informations 2, dans l'ordre d'empilement de ces deux dispositifs 2 et 4. Le montage est complété par un film réfléchissant 10 disposé sous le dispositif de rétroéclairage 4, à distance de ce dernier, et par un film diffusant 12 disposé entre le dispositif de rétroéclairage 4 et le dispositif d'affichage d'informations 2, à distance de ces derniers. Le film réfléchissant 10 a pour but de réfléchir en direction du dispositif de rétroéclairage 4 la lumière qui s'échappe de celui-ci vers le bas, tandis que le film diffusant 12 a pour but d'homogénéiser la lumière qui sort du dispositif de rétroéclairage 4, en atténuant la luminosité des extracteurs de lumière 14. Les extracteurs de lumière 14 tels que des prismes ou des lentilles sont structurés par exemple dans la surface inférieure du dispositif de rétroéclairage 4. Une partie de la lumière représentée par la flèche A sur le dessin se propage par réflexion totale sur les parois internes du dispositif de rétroéclairage 4, tandis qu'une autre partie de la lumière matérialisée par la flèche B est extraite du dispositif de rétroéclairage 4 par les extracteurs de lumière 14 et dirigée vers le dispositif d'affichage d'informations 2 pour éclairer ce dernier. Comme on le voit à l'examen de la figure 1, le dispositif de rétroéclairage 4 est placé dans l'air, ceci afin de ne pas perturber le mécanisme de propagation de la lumière dans ce dispositif de rétroéclairage 4. L'ensemble d'affichage d'informations 1 résultant se compose cependant d'une pluralité d'éléments séparés les uns des autres par des couches d'air nécessaires pour éviter les pertes optiques et permettre une illumination homogène du dispositif d'affichage d'informations 2. L'ensemble d'affichage d'informations 1 est donc encombrant et difficile à intégrer dans une chaîne de production industrielle automatisée. Par ailleurs, lorsque l'ensemble d'affichage d'informations 1 est logé par exemple dans un boîtier, toute modification de la géométrie du boîtier peut nécessiter de reprendre le moule d'injection du dispositif de rétroéclairage, voire de devoir en produire un nouveau, ce qui est coûteux.

Sur la figure 2, on a représenté un ensemble d'affichage d'informations désigné dans son ensemble par la référence numérique générale 16 et qui comprend essentiellement un dispositif d'éclairage par l'avant 18 disposé au-dessus d'un dispositif d'affichage d'informations 20 de type réflectif. Des extracteurs de lumière 22 tels que des prismes ou des lentilles sont structurés sur la surface supérieure 24 du dispositif d'éclairage par l'avant 18 et permettent d'extraire une partie du flux lumineux qui se propage à l'intérieur de ce dispositif d'éclairage 18 pour le diriger vers le dispositif d'affichage d'informations 20 afin d'éclairer ce dernier. Une partie de la lumière représentée par la flèche A sur le dessin se propage par réflexion totale sur les parois internes du dispositif d'éclairage par l'avant 18, tandis qu'une autre partie de la lumière matérialisée par la flèche B est extraite du dispositif d'éclairage 18 par les extracteurs de lumière 22 et dirigée vers le dispositif d'affichage d'informations 20 pour éclairer ce dernier. Conformément à l'invention, le dispositif d'éclairage par l'avant 18, revêtu d'une couche poreuse 26 sur la surface inférieure 28, est fixé sur le dispositif d'affichage d'informations 20 via une couche adhésive transparente 30 qui sert d'interface mécanique et optique pour l'assemblage des deux dispositifs.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées à la présente demande de brevet. En particulier, un exemple d'un matériau poreux bien adapté pour les besoins de la présente invention est décrit dans l'article intitulé « Nanoporous films with low refractive index for large-surface broad-band anti-reflection coatings » paru dans la revue Macromolecular materials and engineering Volume 295, Edition No. 7 du 12 juillet 2010, pages 628-636. Cet article est incorporé par référence dans la présente demande de brevet. Un procédé industriel en phase aqueuse a pour point de départ des suspensions polymériques de nanoparticules inorganiques. Une fois déposée sur un substrat, la solution est séchée et l'on obtient une couche hybride de morphologie poreuse dans laquelle des pores d'air de dimensions nanométriques apparaissent entre des agglomérats de nanoparticules de quelques centaines de nanomètres avec le polymère qui joue le rôle de simple liant. En contrôlant de manière appropriée la surface des nanoparticules, la composition de la solution ou le procédé de fabrication et, en particulier, en faisant varier la nature des nanoparticules, par exemple en choisissant le dioxyde de silicium (SiO2), l'oxyde d'aluminium/hydroxyde (AlOOH), ou le dioxyde de titane (TiO2), on obtient des couches poreuses avec un indice de réfraction moyen n qui peut varier entre de très faibles valeurs (n<1.2) et des valeurs faibles (1.2<n<1.0) dans le domaine du spectre visible. Toutes les couches poreuses sont déposées sur des substrats transparents épais (environ 175 micromètres) réalisés en poly(éthylène téréphtalate) ou PET recouverts sur les deux faces d'une couche d'adhésion de 100 nanomètres. Cette couche d'adhésion est formée par un revêtement non-poreux obtenu par mélange de différents polymères qui permet l'adhésion sur le substrat en PET de couches hydrophiles résultant de procédés de revêtement à base d'eau. On utilise respectivement de l'alcool polyvinylique et de l'acide borique (ou du tétraborate de sodium) comme liant polymérique et durcissant. La solution de revêtement est préparée soit avec des nanoparticules de dioxyde de silicium SiO2 avec une taille de grain initiale de 8 nanomètres et de 12 nanomètres respectivement, soit avec des nanoparticules d'oxyde d'aluminium/hydroxyde AlOOH de taille de grain initiale de 8 et 14 nanomètres respectivement, soit avec des nanoparticules de dioxyde de titane TiO2 directement dispersées dans de l'eau avec une dimension des agrégats bien inférieure à 100 nanomètres.

## Revendications

1. Ensemble d'affichage d'informations comprenant un dispositif d'affichage d'informations (20) de type réflectif et un guide de lumière (18) dans lequel est injectée de la lumière, le guide de lumière (18), disposé au-dessus du dispositif d'affichage d'informations (20) par rapport à un observateur, présentant une surface inférieure (28) en regard du dispositif d'affichage d'informations (20) et une surface supérieure (24) opposée à la surface inférieure (28), des extracteurs de lumière (24), structurés dans la surface supérieure (24) du guide de lumière (18), permettant d'extraire une partie de la lumière injectée dans le guide de lumière (18) et de la diriger en direction du dispositif d'affichage d'informations (20) pour éclairer ce dernier, **caractérisé en ce que** le dispositif d'affichage d'informations (20) est fixé au guide de lumière (18) avec interposition d'une couche poreuse transparente (26) qui recouvre directement la surface inférieure (28) du guide de lumière (18).

2. Ensemble d'affichage d'informations selon la revendication 1, **caractérisé en ce qu'**une couche adhésive (30) est disposée entre le guide de lumière (18) et la couche poreuse transparente (26).

3. Ensemble d'affichage d'informations selon l'une quelconque des revendications 1 ou 2, **caractérisé en ce que** l'épaisseur de la couche poreuse (26) est inférieure ou égale à six micromètres.

4. Ensemble d'affichage selon l'une quelconque des revendications précédentes, **caractérisé en ce que** la couche adhésive est un film optique adhésif, ou bien une colle transparente photo- ou thermopolymérisable.

## Patentansprüche

1. Anordnung für die Anzeige von Daten, die eine Datenanzeigevorrichtung (20) des reflektierenden Typs und einen Lichtleiter (18), in den Licht eingeleitet wird, umfasst, wobei der Lichtleiter (18), der in Bezug auf einen Beobachter über der Datenanzeigevorrichtung (20) angeordnet ist, eine untere Oberfläche (28) gegenüber der Datenanzeigevorrichtung (20) und eine obere Oberfläche (24) gegenüber der unteren Oberfläche (28) aufweist, wobei Lichtextraktionseinrichtungen (24), die in der oberen Oberfläche (24) des Lichtleiters (18) ausgebildet sind, ermöglichen, einen Teil des in den Lichtleiter (18) eingeleiteten Lichts zu extrahieren und in Richtung der Datenanzeigevorrichtung (20) zu lenken, um diese Letztere zu beleuchten, **dadurch gekennzeichnet, dass**

die Datenanzeigevorrichtung (20) an dem Lichtleiter (18) unter Einfügung einer lichtdurchlässigen porösen Schicht (26), die die untere Oberfläche (28) des Lichtleiters (18) direkt abdeckt, befestigt ist.

2. Datenanzeigeanordnung nach Anspruch 1, **dadurch gekennzeichnet, dass** zwischen dem Lichtleiter (18) und der lichtdurchlässigen porösen Schicht (26) eine Klebstoffschicht (30) angeordnet ist.

3. Datenanzeigeanordnung nach einem der Ansprüche 1 oder 2, **dadurch gekennzeichnet, dass** die Dicke der porösen Schicht (26) kleiner oder gleich sechs Mikrometer ist.

4. Anzeigeanordnung nach einem der vorhergehenden Ansprüche, **dadurch gekennzeichnet, dass** die Klebstoffschicht ein optischer Klebstofffilm oder ein lichtdurchlässiger Klebstoff ist, der photo- oder thermopolymerisierbar ist.

**Claims**

1. Data display assembly including a reflective type data display device (20) and a light guide (18) into which light is injected, the light guide (18), disposed above the data display device (20) in relation to an observer, having a lower surface (28) facing the data display device (20) and an upper surface (24) opposite the lower surface (28), light extractors (24), structured on the upper surface (24) of the light guide (18), permitting extraction of part of the light injected into the light guide (18) and directing the light towards the data display device (20) for the illumination thereof, **characterized in that** the data display device (20) is fixed to the light guide (18) with the insertion of a transparent porous layer (26) which covers directly the lower surface (28) of the light guide (18).

2. Data display assembly according to claim 1, **characterized in that** an adhesive layer (30) is disposed between the light guide (18) and the transparent porous layer (26).

3. Data display assembly according to any of claims 1 or 2, **characterized in that** the thickness of the porous layers (26) is less than or equal to six micrometres.

4. Display assembly according to any of the preceding claims, **characterized in that** the adhesive layer is an adhesive optical film, or a transparent photopolymerizable or thermopolymerizable adhesive.

## Fig. 1

## Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008045200 A

**Littérature non-brevet citée dans la description**

- Nanoporous films with low refractive index for large-surface broad-band anti-reflection coatings. Macromolecular materials and engineering. 12 Juillet 2010, vol. 295, 628-636